# EUROPÄISCHE PATENTSCHRIFT

(11) **EP 0 710 549 B1**
(45) Veröffentlichungstag und Bekanntmachung des Hinweises auf die Patenterteilung: **23.08.2000**
(21) Anmeldenummer: 95116875.6
(22) Anmeldetag: 26.10.1995
(51) Int. Cl.: B32B 31/20, B32B 27/30

(54) **Verfahren zum thermischen Verkleben von Acrylkunststoffteilen**
Method for thermal welding of acrylic parts
Procédé pour le soudage thermique de parties en polymère acrylique

(30) Priorität: 04.11.1994 DE 4439419
(43) Veröffentlichungstag der Anmeldung: 08.05.1996
(73) Patentinhaber: Röhm GmbH, 64293 Darmstadt (DE)
(72) Erfinder: Theil, Alexander, D-64354 Reinheim (DE); Fehring, Karl-Heinz, D-64589 Stockstadt/Rh (DE); Rimpl, Manfred, D-64560 Riedstadt (DE)

(56) Entgegenhaltungen:
- EP-A- 0 584 593
- DE-A- 2 058 585
- FR-A- 1 473 254

## Beschreibung

### Gebiet der Erfindung

Die Erfindung betrifft ein Verfahren zum thermischen Verkleben von mindestens zwei Acrylkunststoffteilen und mit diesem Verfahren hergestellte Verbunde.

### Stand der Technik

Acrylkunststoffe, wie insbesondere Polymethylmethacrylat, zeigen beim Erwärmen abhängig von ihrem mittleren Molekulargewicht thermoplastisches bis thermoelastisches Verhalten.
Thermoplastisch verarbeitbare Polymethacrylat-Kunststoffe, wie sie im Spritzguß oder bei der Extrusion verwendet werden, weisen mittlere Molekulargewichte M_{w} zwischen 2 x 10⁴ und 5 x 10⁵, insbesondere zwischen 5 x 10⁴ und 2 x 10⁵ Dalton auf (zur Bestimmung von M_{w} vgl. beispielsweise H.F. Mark et. al., Encyclopedia of Polymer Science and Technology, 2nd Ed., Vol. 10, Seiten 1 bis 19, J. Wiley, 1989). Solche thermoplastischen Polymethacrylat-Kunststoffe sind bei Temperaturen über 100 Grad C unter Druck verschweißbar.
Schwieriger ist die Herstellung von Verbunden aus gegossenen Polymethacrylat-Kunststoffen, die im allgemeinen mittlere Molkulargewichte M_{w} > 5 x 10⁵ Dalton aufweisen. Die Herstellung solcher Verbunde wird vor allem mit Klebeverfahren durchgeführt, die in Verklebungen mit Lösemitteln, mit Klebelacken sowie mit Polymerisationsklebstoffen unterschieden werden.
Nachteilig bei den Verfahren mit Lösemitteln und Klebelacken ist, daß beide Verfahren insbesondere mit halogenierten Kohlenwasserstoffen als Lösemittel arbeiten, wegen deren günstigen Anlöseeigenschaften für Polymethacrylate. Solche halogenierten Kohlenwasserstoffe bringen gesundheitliche und umweltrelevante Risiken mit sich. Weiterhin kann es bei Klebeverfahren, die mit Lösemitteln arbeiten, zur Rißbildung in den Polymethacrylat-Kunststoffteilen kommen, insbesondere bei der Verklebung von Spritzguß- oder Extrusionsteilen, die in der Regel Eigenspannungen aufweisen. Die Polymerisationsklebstoffe zum Verkleben von Polymethacrylat-Kunststoffteilen enthalten im allgemeinen die Komponenten Methylmethacrylat, Polymethylmethacrylat und zur Beschleunigung des Klebvorgangs Polymerisationsinitiatoren, wie beispielsweise Peroxide, Lichtinitiatoren oder Redoxinitiatoren. Auch bei diesem Verfahren kann, durch das als Lösemittel wirkende monomere Methylmethacrylat bedingt, Spannungsrißkorrosion in den Polymethacrylat-Kunststoffteilen auftreten. Die Härtungszeiten bei Polymerisationsklebstoffen liegen im allgemeinen zwischen 1 und 3 Stunden, was ebenfalls für einige Anwendungen von Nachteil ist, wie beispielsweise für Serienfertigungen.
Weiterhin können Verbunde aus Polymethacrylat-Kunststoffen durch thermisches Verschweißen hergestellt werden, wobei sowohl thermoplastische als auch bedingt gegossene, thermoelastische Polymethacrylat-Kunststoffe verwendet werden können. Das thermische Verschweißen erfolgt bei Temperaturen über 100 Grad C und gegebenenfalls unter Anwendung von Druck (vgl. hierzu beispielsweise Kunststoff-Handbuch, Bd. IX, Polymethacrylate, Seiten 466, 467, 600, 601, 604 bis 608, 613, 614, Carl Hanser, München, 1975). Bei den beschriebenen Verfahren zum thermischen Verschweißen müssen lokale Überhitzungen an den Schweißstellen, die zur Zersetzung der Polymethacrylat-Kunststoffe und damit zur Abspaltung von monomeren, gasförmigen Methacrylaten führen, sorgfältig vermieden werden. Bei der Herstellung von flächigen Verbunden führen Verfahren zum thermischen Verschweißen des Standes der Technik oftmals zur Bildung von Monomeren-Gasbläschen und deren Einschluß im Verbund. Daher wurden flächige Verbunde aus Polymethacrylat-Kunststoff bisher vorwiegend durch Verkleben hergestellt.
In EP-A 584 593 werden Kunststoffverbunde beschrieben, bei denen mindestens ein Teil des Verbundes aus Polymethacrylat-Kunststoff besteht und mindestens eine Verbindung zwischen zwei Polymethacrylat-Kunststoffschichten durch thermisches Verschweißen hergestellt worden ist, wobei das thermische Verschweißen in Gegenwart einer zwischen 0,01 und einigen mm dicken Zwischenschicht eines im wesentlichen aus Methylmethacrylat aufgebauten Polymeren durchgeführt wird. Vorzugsweise ist die Zwischenschicht eine Folie oder eine dünne Platte aus Polymethylmethacrylat. Das thermische Verschweißen der in EP-A 584 593 beanspruchten Kunststoffverbunde erfolgt durch Erhitzen der Materialien auf 150 bis 200 Grad C, vorzugsweise auf etwa 170 Grad C, wobei die erhitzten Teile unter Druck zusammengepreßt werden. Auch bei diesem Verfahren treten mitunter Einschlüsse von Luft oder monomeren Zersetzungsprodukten im Verbund auf, wenn die vorgeschriebene Temperaturführung nicht exakt eingehalten wird.

### Aufgabe und Lösung

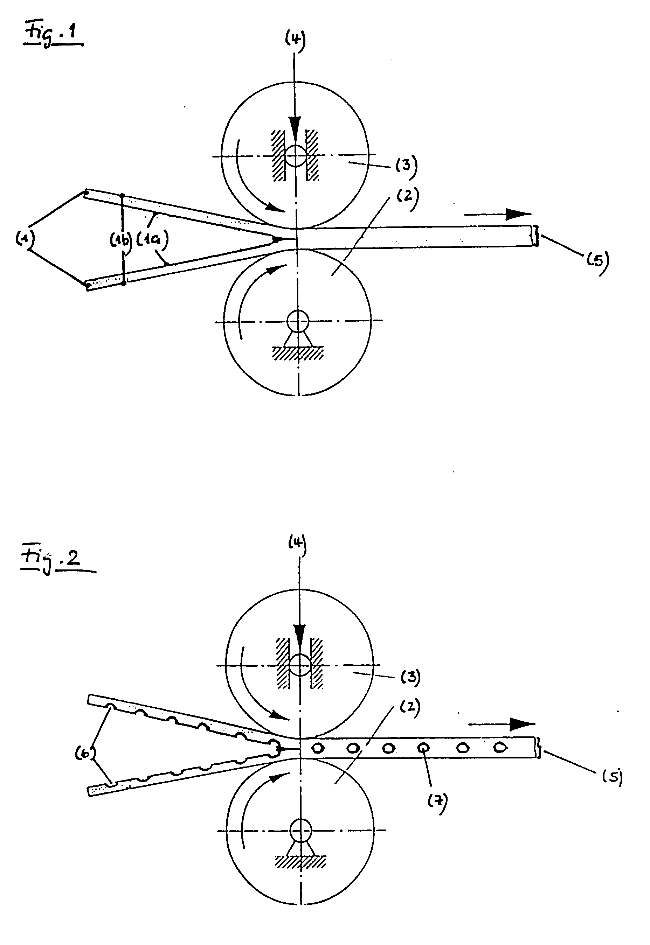

Aufgabe war es also, das seit langem bestehende Bedürfnis nach einem Verfahren zur flächigen Verklebung von Polymethacrylat-Kunststoffen zu befriedigen, bei dem die Klebenaht möglichst wenig sichtbar ist und die Verklebung ohne Hilfsmittel, wie Klebstoffe oder Folien, bewerkstelligt werden kann, und bei dem Klebeflächen ohne optische Inhomogenitäten, wie beispielsweise Schlieren oder Gasblasen, erreichbar sind.
Überraschenderweise wurde gefunden, daß optisch einwandfreie flächige Verklebungen von Polymethacrylat-Kunststoffen ohne weitere Hilfsmittel mit folgendem Verfahren erreicht werden können:
Die Polymethacrylat-Kunststoffteile (Fig. 1,1) werden an ihrer zum Verkleben oder zum Fügen vorgesehenen Oberfläche (1a) auf Temperaturen zwischen 130 und 200 Grad C vorerwärmt, mit der Maßgabe, daß die Kunststoffteile selbst dimensionsstabil bleiben, und zwischen einem Walzenpaar (2, 3), bei dem mindestens eine Walze (3), über die eine Preßkraft (4) ausgeübt werden kann, beweglich gelagert ist, unter kontinuierlichem Vorschub mit einer Preßkraft (4) zwischen 10 und 500 N verpreßt, wobei die Vorschubgeschwindigkeit zwischen 5 und 200 mm/s liegt.

Vorzugsweise sind die Polymethacrylat-Kunststoffteile Platten oder Folien mit Dicken zwischen 0,5 und 100 mm, besonders bevorzugt mit Dicken zwischen 1 und 50 mm.

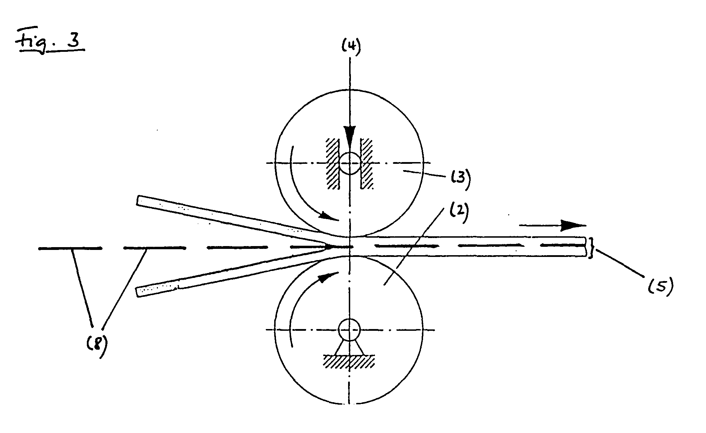

In weiteren bevorzugten Ausführungsformen der Erfindung werden zwischen die Klebeflächen (1a) der Polymethacrylat-Kunststoffteile beim Verpressen flächige Gegenstände (Fig. 3: 8), wie beispielsweise Bilder oder Farbfolien, oder längliche Gegenstände (8), wie beispielsweise Fäden, Drähte, Stahlspiralen oder dünne Bahnen anderer Kunststoffe, eingelagert. Bedingung hierfür ist, daß die Dicke solcher Gegenstände maximal 50 %, vorzugsweise maximal 25 % der Dicke der Polymethacrylat-Kunststoffteile beträgt.
In einer bevorzugten Ausgestaltung der Erfindung sind die zu verklebenden Polymethacrylat-Kunststoffteile (1) Platten, die Gravuren oder Einprägungen (Fig. 2: 6) von wenigstens 0,2 mm, bevorzugt von wenigstens 1 mm Tiefe aufweisen, und die solchermaßen verpreßt werden, daß die Einprägungen (6) zu den Klebeflächen (1a) hin zeigen.
Damit lassen sich Formkörper mit dreidimensionalen Einschlüssen definierter Gestalt herstellen.
Die für das Verkleben notwendige Oberflächentemperaturen an den Klebeseiten (1a) der Polymethacrylat-Kunstststoffteile (1) kann mit indirekten physikalischen Methoden, wie beispielsweise durch Hochfrequenz- oder Ultraschallfelder, oder vorzugsweise durch direkte Bestrahlung, beispielsweise mit Warmluftgebläsen oder Infrarot-Strahlern, erzeugt werden. Im allgemeinen werden die Polymethacrylat-Kunststoffteile (1) im Ofen zur Vermeidung von thermischen Spannungen vor der Wärmebestrahlung vorerwärmt. Die Differenz zwischen Oberflächen- und Kerntemperatur der Polymethacrylat-Kunststoffteile (1) beträgt zwischen 20 und 150 K bevorzugt zwischen 30 und 120 K, wobei die Kerntemperatur immer mindestens 10 K unterhalb der Vicat-Erweichungstemperatur VET des Polymethacrylat-Kunststoffs bleibt.

### Durchführung der Erfindung

Die Polymethacrylat-Kunststoffteile bestehen vorzugsweise aus Polymerisaten des Methylmethacrylats, die bis zu 50 Gew.-% aus anderen, mit Methylmethacrylat copolymerisierbaren Monomeren aufgebaut sein können. Besonders bevorzugt beträgt der Anteil des Methylmethacrylats 80 bis 100 Gew.-%. Als Comonomere kommen in erster Linie Alkylacrylate mit 1 bis 6 Kohlenstoffatomen im Alkylesterrest, Alkyl- und/oder Methacrylnitril, Styrol und/oder substituierte Styrole sowie Maleinsäureanhydrid in Betracht. Zur Verwendung kommen im allgemeinen thermoplastisch oder thermoelastisch verformbare Polymethacrylat-Kunststoffe obiger Zusammensetzung mit spezifischen Viskositäten nach DIN 51562 in Chloroform bei 25 Grad C im Bereich zwischen 20 und 1000 ml/g, entsprechend ungefähren mittleren Molekulargewichten M_{w} zwischen 3 x 10⁴ und ca 5 x 10⁶ Dalton.
Die Polymethacrylat-Kunststoffteile können in Anteilen von 10⁻³ bis 20 Gew.-%, bezogen auf das Polymethacrylat, übliche Kunststoffadditive, wie beispielsweise Lichtschutzmittel, Stabilisatoren gegen thermische Zersetzung, Gleitmittel, Füllstoffe sowie insbesondere Farbstoffe oder Pigmente enthalten.

Die Polymethacrylat-Kunststoffteile sind vorzugsweise Platten oder Folien, die großflächige Verklebungen ermöglichen, für welche das erfindungsgemäße Verfahren bevorzugt geeignet ist. Die Platten oder Folien weisen bevorzugt Dicken zwischen 0,5 und 100 mm, besonders bevorzugt zwischen 1 und 50 mm auf. Die Fläche der Platten kann beispielsweise zwischen 0,01 und 5 Quadratmetern liegen, mit Plattenbreiten zwischen 0,1 und 2 m und Plattenlängen zwischen 0,1 und 5 m. Mit Folien können praktisch beliebig lange Verbunde mit Breiten von beispielsweise 0,1 bis 2 m hergestellt werden.

In Fig. 1 ist die erfindungsgemäße Vorrichtung zur Herstellung von Verbunden aus Polymethacrylat-Teilen (1) beispielhaft in einer Prinzipskizze dargestellt. Die an der Oberfläche der Klebeseite (1a) auf Temperaturen zwischen 130 und 200 Grad C erhitzten Polymethacrylat-Platten oder -Folien (1) werden durch ein gegensinnig drehendes Walzenpaar geführt, wobei die untere Walze (2) fest gelagert ist und wobei die beweglich gelagerte obere Walze (3) mit einer Preßkraft (4) von 10 bis 500 N beaufschlagt werden kann. Die Vorschubgeschwindigkeit, mit der die Polymethacrylat-Platten oder -Folien verpreßt werden, wird beispielsweise über die Drehgeschwindigkeit der Walzen (2) und (3) festgelegt und beträgt zwischen 5 und 200 mm/s, vorzugsweise zwischen 10 und 150 mm/s. Die beispielsweise aus Edelstahl bestehenden Walzen (2) und (3) sind im allgemeinen oberflächenpoliert oder mit einer elastischen Oberflächenbeschichtung, beispielsweise einer Weichgummischicht mit niedriger Shore-Härte (vgl. hierzu EP-A 201 044), versehen, um keine Beschädigungen an der Oberflächenseite (1b) der Platten oder Folien und später der Verbunde (5) zu erzeugen. In Spezialfällen können die Oberflächen der Walzen (2) und (3) strukturiert sein, womit definierte Muster auf der Oberfläche der Verbunde (5) erzeugt werden können, wobei hierzu die Oberflächen (1b) der Platten oder Folien (1) vorzugsweise auf Temperaturen zwischen 100 und 150 Grad C erhitzt werden.

Die Oberflächen der Klebeseiten (1a) der Platten oder Folien (1) werden solchermaßen erwärmt, daß die Platten oder Folien selbst dimensionsstabil bleiben, wobei für die Erwärmung beispielsweise indirekte physikalische Methoden, wie z.B. elektromagnetische Hochfrequenz- oder Ultraschallfelder angewendet werden können. Vorzugsweise kommen direkte Methoden der Wärmebestrahlung zur Anwendung, wie beispielsweise Warmluftgebläse oder Infrarotstrahler.
Im allgemeinen werden die Polymethacrylat-Kunststoffteile (1) im Ofen zur Vermeidung von thermischen Spannungen von der Wärmebestrahlung solchermaßen vorerwärmt, daß die Differenz zwischen Oberflächen- und Kerntemperatur der Polymethacrylat-Kunststoffteile (1) zwischen 20 und 150 K, bevorzugt zwischen 30 und 120 K beträgt, wobei die Kerntemperatur der Polymethacrylat-Kunststoffteile (1) immer mindestens 10 K unterhalb der Erweichungstemperatur VET des Polymethacrylat-Kunststoffs bleibt.
Die Preßkraft (4), die mit der oberen Walze (3) auf die Polymethacrylat-Teile (1) und den sich bildenden Verbund (5) der Polymethacrylat Teile (1) ausgeübt wird, kann beispielsweise mit einfachen Hebelapparaturen pneumatisch oder hydraulisch erzeugt werden. Im allgemeinen ist die Preßkraft (4) während des gesamten Verpreßvorgangs konstant, wobei Preßkräfte (4) zwischen 10 und 500 N, bevorzugt zwischen 25 und 400 N angewendet werden.
In einer weiteren Ausführungsform der Erfindung können Verbunde (5) aus Polymethacrylat-Kunststoffteilen mit flächigen Rändern, wie beispielsweise Kuppeln, Tonnengewölbe oder Schalen, hergestellt werden, indem die Ränder selektiv erhitzt werden und nach dem erfindungsgemäßen Verfahren zusammengefügt werden.

Die Platten oder Folien (1) können Gravuren oder Einprägungen (Fig. 2: 6) besitzen, die Tiefen von mindestens 0,2 mm, vorzugsweise von mindestens 1 mm aufweisen, die sich entweder an der Außenseite (1b) oder an der Klebeseite (1a) der Platten oder Folien (2) befinden. Liegen die Gravuren oder Einprägungen an der Klebeseite (1a), so lassen sich dreidimensionale Einschlüsse (7) definierter Gestalt im Verbund (5) erzeugen (Fig. 2). Bevorzugt werden solche dreidimensionalen Einschlüsse (7) durch das Verkleben von mindestens zwei Platten (1) erzeugt, bei denen jede Platte Gravuren oder Einprägungen (6) auf der Klebeseite (1a) aufweist, die spiegelbildlich zusammengefügt werden.
Bedingung für die Herstellung solcher dreidimensionaler Einschlüsse (7) ist, daß die Gravuren oder Einprägungen (6) beim Erwärmen der Oberflächen der Klebeseite (1a) auf Temperaturen von bis zu 200 Grad C formstabil bleiben.
In weiteren Ausgestaltungen der Erfindung können flächige oder längliche Gegenstände (Fig. 3, 8) zwischen den Klebeseiten (1a) der Platten oder Folien eingelagert werden. Voraussetzung für die optisch einwandfreie Einlagerung solcher Gegenstände, d.h. beispielsweise Vermeidung von Lufteinschlüssen oder von Schlierenbildung, ist, daß die Dicke der Gegenstände (8) maximal 50 %, vorzugsweise maximal 25 % der Dicke der Platten oder Folien ausmacht. Flächige Gegenstände (8), die zwischen den Klebeseiten (1a) der Platten oder Folien (1) eingelagert werden können, sind beispielsweise: Fotographien, Drucke, farbige Folien, Pigmentpapiere oder Folien aus thermoplastischen Elastomeren, wobei mit letzteren Sicherheitsglas-Verbunde erzeugt werden können.
Dabei ist zu beachten, daß die eingelagerten Gegenstände (8) maximal 90 % der Fläche der Klebeseiten (1a) einnehmen dürfen. Längliche Gegenstände (8), die zwischen den Platten oder Folien (1) eingelagert werden können, sind beispielsweise schmale Kunststoffbahnen, die eingefärbt sein können, Drähte, Stahlspiralen, Stoffbänder, Papierstreifen oder bevorzugt Fäden, ganz besonders bevorzugt Kunststoff-Fäden mit hoher Elastizität und hohem Modul, wie beispielsweise Polyester-oder Nylonfasern, deren Einlagerung zu besonders schlagfesten Verbunden führt.

### Vorteile der Erfindung

Das erfindungsgemäße Verfahren ermöglicht eine großflächige Verklebung von Polymethacrylat-Kunststoffteilen (1), insbesondere von Platten oder Folien, ohne gleichzeitige Erzeugung von Gasinklusionen, die durch eingeschlossene Luft oder Monomere als thermische Zersetzungsprodukte entstehen können, mit einfachsten Mitteln. Bei der Aufsicht auf die solchermaßen erzeugten Verbunde (5) sind visuell weder eine Klebenaht noch andere optische Inhomogenitäten erkennbar.
Durch Verklebung von Platten oder Folien (1) mit Gravuren oder Einprägungen (6) auf der Klebeseite (1a) lassen sich dreidimensionale Einschlüsse (7) definierter Gestalt in den Verbunden (5) erzeugen (Fig. 2), was zu einer sehr plastischen Wirkung solcher Verbundsysteme führt. So lassen sich beispielsweise Figuren als Einschlüsse (7) darstellen, indem die spiegelbildlichen Halbformate in die Polymethacrylat-Kunststoffteile (1) eingeprägt werden und formschlüssig mit dem erfindungsgemäßen Verfahren zusammengefügt werden.
Weiterhin können flächige oder längliche Gegenstände (8), wie beispielsweise Bilder, Folien, Fäden, Drähte oder Stahlspiralen, zwischen den Klebeseiten (1a) solchermaßen in die Verbunde (5) eingelagert werden, daß der Polymethacrylat-Kunststoff die Gegenstände (8) vollständig umschließt (Fig. 3). Solche Verbundsysteme können vorteilhaft beispielsweise im Werbebereich (Leuchtdisplay, großflächige Werbung), als Verbundsysteme (mit Folien aus thermoplastischen Elastomeren) oder als splitterfeste Lärmschutzwände (mit eingelagerten Fäden oder Spiralen aus Stahl oder aus elastischen Kunststoffen mit hohem Modul) eingesetzt werden.

Die folgenden Beispiele sollen die Erfindung erläutern.

### BEISPIELE

### Beispiel 1

### Herstellung eines Verbundes aus Polymethylmethacrylat-Platten mit eingelagertem Papierbild

2 Platten aus Polymethylmethacrylat (Plexiglas ® XT 20070: Molekulargewicht M_{w} ca. 155 000 Dalton) mit den Abmessungen 530 x 360 x 8 mm (Länge x Breite x Höhe) werden an jeweils einer Oberfläche (Klebeseite) auf eine Temperatur von 175 Grad C erwärmt, mit gegenüberliegenden, noch getrennten Klebeseiten vor den Walzen angeordnet und gemeinsam mit dem Papierbild zwischen den Klebeseiten zwischen die Walzen mit einer Vorschubgeschwindigkeit von 50 mm/s eingezogen, wobei die Walzen mit einer Kraft von 100 N zusammengepreßt werden.
Es resultiert ein Verbund mit eingelagertem unbeschädigtem Papierbild ohne Gasinklusionen, bei dem in der Aufsicht keine Klebenähte sichtbar sind.

### Beispiel 2

### Herstellung eines Verbunds aus Polymethylmethacrylat-Platten mit dreidimensionalen Einschlüssen.

Auf 2 Platten aus Polymethylmethacrylat (Plexiglas ® XT 20070: Molekulargewicht M_{w} ca. 155 000 Dalton) mit den Abmessungen 275 x 165 x 8 mm (Länge x Breite x Höhe) werden jeweils an einer Oberfläche (Klebeseite) nach den gängigen Verfahren des Standes der Technik mehrere Formen eingeprägt, wobei die Prägetiefe zwischen 0,2 und 10 mm liegt und die Prägeformen beim Aufeinanderlegen der Klebeseite formschlüssig zusammenfügbar sind.
Danach werden die Platten an ihrer Klebeseite auf eine Oberflächentemperatur von 175 Grad C erwärmt, mit gegenüberliegenden, noch getrennten Klebeseiten vor den Walzen angeordnet und mit einer Vorschubgeschwindigkeit von 50 mm/s zwischen die Walzen eingezogen, wobei die Walzen mit einer Kraft von 100 N zusammengepreßt werden.
Es resultiert ein Verbund mit eingelagerten dreidimensionalen Einschlüssen ohne Gasinklusionen, bei dem in der Aufsicht keine Klebenähte sichtbar sind.

## Patentansprüche

1. Verfahren zur Herstellung von flächigen Verbunden (Fig. 1: 5) aus Polymethacrylat-Kunststoff durch thermisches Verkleben von mindestens zwei an ihren Oberflächen erwärmten Teilen (1) aus Polymethacrylat-Kunststoff,
dadurch gekennzeichnet,
daß die an der Klebeseite (1a) auf Oberflächentemperaturen von 130 bis 200 Grad C vorerwärmten Teile aus Polymethacrylat-Kunststoff (1), die während der Vorwärmphase ihre ursprüngliche Form beibehalten, zwischen einem Walzenpaar (2, 3), bei dem mindestens eine Walze (3), mit der die Preßkraft (4) ausgeübt wird, beweglich gelagert ist, mit einer Vorschubgeschwindigkeit zwischen 5 und 200 mm/s und mit einer Preßkraft zwischen 10 und 500 N verpreßt werden.

2. Verfahren gemäß Anspruch 1, dadurch gekennzeichnet, daß die Teile aus Polymethacrylat-Kunststoff (1) Platten oder Folien mit Dicken zwischen 0,5 und 100 mm, vorzugsweise zwischen 1 und 50 mmm sind.

3. Verfahren gemäß den Ansprüchen 1 und 2, dadurch gekennzeichnet, daß zwischen die zu verklebenden Teile aus Polymethacrylat-Kunststoff (1) flächige oder längliche Gegenstände (Fig. 3: 8) mit Dicken, die maximal 50 %, vorzugsweise maximal 25 % der Dicke der Teile aus Polymethacrylat-Kunststoff (1) betragen, eingesetzt werden, wobei die flächigen oder länglichen Gegenstände (8) maximal 90 % der Klebefläche (1a) bedecken dürfen.

4. Verfahren gemäß den Ansprüchen 1 und 2, dadurch gekennzeichnet, daß die Teile aus Polymethacrylat-Kunststoff (1) an ihrer Klebefläche Gravuren oder Einprägungen (Fig. 2: 6) von mindestens 0,2 mm, vorzugsweise von mindestens 1 mm Tiefe aufweisen, wobei die Teile aus Polymethacrylat-Kunststoff (1) solchermaßen verpreßt werden, daß Verbunde (5) mit dreidimensionalen Einschlüssen (7) von definierter Gestalt entstehen.

5. Verfahren gemäß den Ansprüchen 1 bis 4, dadurch gekennzeichnet, daß die Differenz zwischen der Oberflächentemperatur der Klebeseiten (1a) und der Kerntemperatur der Teile (1) aus Polymethacrylat-Kunststoff mindestens 20 K, vorzugsweise mindestens 50 K beträgt.

6. Verfahren gemäß den Ansprüchen 1 bis 5, dadurch gekennzeichnet, daß der Polymethacrylat-Kunststoff mindestens 50 Gew.%, bevorzugt mindestens 80 Gew.-% Methylmethacrylat-Einheiten besitzt.

7. Verfahren gemäß den Ansprüchen 2 bis 6, dadurch gekennzeichnet, daß die Platten oder Folien aus Polymethacrylat-Kunststoff Breiten zwischen 0,1 und 2 m sowie Längen zwischen 0,1 und 5 m aufweisen.

8. Verfahren gemäß den Ansprüchen 3 bis 7, dadurch gekennzeichnet, daß als flächige Gegenstände (8) Folien aus thermoplastischen Elastomeren zwischen den zu verklebenden Teilen (1) aus Polymethacrylat-Kunststoff eingelagert werden.

9. Verfahren gemäß den Ansprüchen 3 bis 7, dadurch gekennzeichnet, daß als längliche Gegenstände (8) Drähte, Stahlspiralen oder Fäden, bevorzugt Kunststoff-Fäden mit hoher Elastizität und hohem Modul, zwischen den zu verklebenden Teilen (1) aus Polymethacrylat-Kunststoff eingelagert werden.

## Claims

1. A process for the production of laminar composites (Fig. 1 5) of polymethacrylate plastic by thermal adhesion of at least two polymethacrylate plastic parts (1), heated on their surface, characterised in that the polymethacrylate plastic parts (1), pre-heated to surface temperatures of 130 to 200°C on the adhesion side (1a) and which maintain their original form during the pre-heating phase, are pressed, at a feeding speed of between 5 and 200 mm/s and with a force of between 10 and 500 N, through a pair of rollers (2, 3) wherein at least one roller (3), via which the pressing force (4) is exerted, is mounted so as to be moveable.

2. A process according to claim 1, characterised in that the polymethacrylate plastic parts (1) are plates or foils with a thickness of between 0.5 and 100 mm, preferably between 1 and 50 mm.

3. A process according to claims 1 and 2, characterised in that laminar or elongated objects (Fig. 3 8), having thicknesses of a maximum of 50%, preferably a maximum of 25%, of the thickness of the polymethacrylate plastic parts (1), are placed between the polymethacrylate plastic parts (1), which are to be adhered, wherein these laminar or elongated objects (8) may cover a maximum of 90% of the adhesion surface (1a).

4. A process according to claims 1 and 2, characterised in that the polymethacrylate plastic parts (1) have engravings or imprints on their adhesion surfaces (Fig. 2 6) with a depth of at least 0.2 mm, preferably at least 1 mm, wherein the polymethacrylate plastic parts (1) are pressed in such a way that composites (5) result with three-dimensional occlusions (7) of defined shape.

5. A process according to claims 1 to 4, characterised in that the difference between the surface temperature of the adhesion sides (1a) and the core temperature of the polymethacrylate plastic parts (1) is at least 20 K, preferably at least 50 K.

6. A process according to claims 1 to 5, characterised in that the polymethacrylate plastic comprises at least 50 wt.-%, preferably at least 80 wt.-% methyl methacrylate units.

7. A process according to claims 2 to 6, characterised in that the plates or foils of polymethacrylate plastic have widths of between 0.1 and 2 m and lengths of between 0.1 and 5 m.

8. A process according to claims 3 to 7, characterised in that as laminar objects (8), foils of thermoplastic elastomers are inlaid between the polymethacrylate plastic parts (1) which are to be adhered.

9. A process according to claims 3 to 7, characterised in that as elongated objects (8), wires, steel spirals or filaments, preferably plastic filaments with high elasticity and high modulus, are inlaid between the polymethacrylate plastic parts (1) which are to be adhered.

## Revendications

1. Procédé de production d'assemblages bidimensionnels (5) en matière plastique de polyméthacrylate par thermosoudage d'au moins deux pièces (1) en matière plastique de poyméthacrylate, chauffées à leur surface,
caractérisé en ce qu'
on presse les pièces de matière plastique de polyméthacrylate (1), préchauffées sur leur côté à coller (1a) à des températures de surface de 130 à 200°C et qui au cours de la phase de préchauffage conservent leur forme d'origine entre une paire de cylindres (2, 3), dont au moins un cylindre (3) exerce la force de pression (4) de façon mobile, avec une vitesse d'avancée comprise entre 5 et 200 mm/seconde et avec une force de pression comprise entre 10 et 500 N.

2. Procédé selon la revendication 1,
caractérisé en ce que
les pièces sont constituées de plaques ou de feuilles de matière plastique en polyméthacrylate (1) ayant des épaisseurs comprises entre 0,5 et 100 mm, de préférence entre 1 et 50 mm.

3. Procédé selon les revendications 1 et 2,
caractérisé en ce que
les objets bidimensionnels ou longitudinaux (8) en matière plastique de polyméthacrylate (1) entre les plaques à coller ont des épaisseurs qui s'élèvent au maximum à 50 %, de préférence au maximum à 25 %, de l'épaisseur des pièces en matière plastique de polyméthacrylate (1), les objets bidimensionnels ou longitudinaux (8) devant recouvrir au maximum 90 % de la surface à coller (1a).

4. Procédé selon les revendications 1 et 2,
caractérisé en ce que
les pièces en matière plastique du poyméthacrylate (1) présentent sur leur surface à coller des gravures ou des impressions (6) d'au moins 0,2 mm, de préférence d'au moins 1 mm d'épaisseur, les pièces en matière plastique de poyméthacrylate (1) étant pressées de manière à obtenir des assemblages (5) avec des inclusions tridimensionnelles (7) de forme définie.

5. Procédé selon les revendications 1 à 4,
caractérisé en ce que
la différence entre la température des surfaces à coller (1a) et la température du noyau des pièces (1) en matière plastique de polyméthacrylate s'élève à au moins 20 K, de préférence à au moins 50 K.

6. Procédé selon les revendications 1 à 5,
caractérisé en ce que
la matière plastique du polyméthacrylate possède au moins 50 % en poids, de préférence au moins 80 % en poids, d'unités méthacrylate de méthyle.

7. Procédé selon les revendications 2 à 6,
caractérisé en ce que
les plaques ou feuilles en matière plastique de polyméthacrylate possèdent une largeur comprise entre 0,1 et 2 mètres ainsi qu'une longueur comprise entre 0,1 et 5 mètres.

8. Procédé selon les revendications 3 à 7,
caractérisé en ce qu'
on insère comme objets bidimensionnels (8) des feuilles en élastomères thermoplastiques entre les pièces à coller (1) en matière plastique de polyméthacrylate.

9. Procédé selon les revendications 3 à 7,
caractérisé en ce qu'
on insère comme objets longitudinaux (8) des fils métalliques, des spirales en acier, ou des fils, de préférence des fils de matière plastique de grande élasticité et de haut module, entre les pièces à coller (1) en matière plastique de polyméthacrylate.
